Europäisches Patentamt

European Patent Office

Office européen des brevets

(19)

(11) **EP 0 771 439 B1**

(12) **FASCICULE DE BREVET EUROPEEN**

(45) Date de publication et mention
de la délivrance du brevet:
**15.03.2000 Bulletin 2000/11**

(21) Numéro de dépôt: **96916184.3**

(22) Date de dépôt: **10.05.1996**

(51) Int Cl.7: **G05D 1/00**

(86) Numéro de dépôt international:
**PCT/FR96/00705**

(87) Numéro de publication internationale:
**WO 96/36910 (21.11.1996 Gazette 1996/51)**

(54) **PROCEDE ET DISPOSITIF POUR DETERMINER LES CONFIGURATIONS DE VOL D'UN AERONEF**

VERFAHREN UND ANORDNUNG ZUM ERMITTELN VON FLUGZEUGFLUGKONFIGURATIONEN

METHOD AND DEVICE FOR DETERMINING THE FLIGHT CONFIGURATIONS OF AN AIRCRAFT

(84) Etats contractants désignés:
**DE GB IT**

(30) Priorité: **17.05.1995 FR 9505840**

(43) Date de publication de la demande:
**07.05.1997 Bulletin 1997/19**

(73) Titulaire: **EUROCOPTER**
**F-13725 Marignane Cédex (FR)**

(72) Inventeur: **GENOUX, Gérard, Charles, Louis**
**F-13710 Fuveau (FR)**

(74) Mandataire: **Bonnetat, Christian**
**CABINET BONNETAT**
**29, rue de St. Pétersbourg**
**75008 Paris (FR)**

(56) Documents cités:
**WO-A-93/24873**

- **IEEE TRANSACTIONS ON SYSTEMS,MAN,AND CYBERNETICS, vol. 23, no. 6, Novembre 1993, NEW-YORK, pages 1699-1717, XP000417681 STENGEL: "TOWARD INTELLIGENT FLIGHT CONTROL"**

## Description

La présente invention concerne un procédé pour déterminer les configurations de vol d'un aéronef, notamment un hélicoptère, ainsi qu'un dispositif pour la mise en oeuvre dudit procédé.

Dans le cadre de la présente invention, on entend par configuration de vol d'un aéronef une phase de vol, par exemple le décollage, l'atterrissage ou le vol en palier, présentant des caractéristiques de vol déterminées, susceptible d'être différenciée d'autres phases de vol, et pendant laquelle l'aéronef est soumis à des types de contraintes relativement constants.

La connaissance des configurations de vol de l'aéronef, par exemple la configuration de vol actuelle, est souvent nécessaire :

- soit dans un but de surveillance en temps réel de l'aéronef ;
- soit dans un but de maintenance, par exemple pour déterminer si un organe particulier a été soumis à des contraintes élevées nécessitant son remplacement.

On connaît différentes méthodes pour déterminer les configurations de vol d'un aéronef.

En premier lieu, on connaît des méthodes mettant en oeuvre des réseaux de neurones qui déterminent les configurations de vol à partir de mesures effectuées en vol et de coefficients prédéterminés stockés. La phase de détermination et de stockage de ces coefficients est longue et fastidieuse. De plus, une fois établies, ces méthodes peuvent être très difficilement modifiées, par exemple pour être adaptées à des connaissances nouvelles ou à des modifications techniques de l'aéronef.

En second lieu, on connaît une méthode basée sur l'intelligence artificielle et utilisant essentiellement des données empiriques. Cette méthode nécessite également une mise en oeuvre longue et ne permet pas de reconnaître toutes les configurations de vol possibles.

On peut également citer une méthode basée sur l'analyse de données, en particulier de paramètres de vol spécifiques, méthode qui ne présente toutefois pas une précision complètement satisfaisante.

La présente invention a pour objet de remédier à ces inconvénients. Elle concerne un procédé permettant de déterminer, de façon rapide et précise, les configurations de vol d'un aéronef, en particulier un hélicoptère.

A cet effet, ledit procédé est remarquable selon l'invention :

- en ce que, dans une étape préliminaire :

  . on définit les différentes configurations de vol supposées possibles pour ledit aéronef ;
  . on détermine une pluralité de phases de vol représentatives desdites configurations de vol ;
  . on détermine une pluralité de paramètres caractéristiques susceptibles d'être mesurés sur l'aéronef ;
  . on mesure sur ledit aéronef, pour chacune desdites phases de vol, les valeurs desdits paramètres ; et
  . pour chacune desdites configurations de vol, on calcule dans un système métrique déterminé, à partir desdites valeurs mesurées des paramètres pour les phases de vol représentatives, un indice de flou qui est représentatif de la situation de ladite configuration de vol dans ledit système métrique ; et

- en ce que, pour une phase de vol dudit aéronef à définir :

  . au cours de ladite phase de vol, on mesure les valeurs desdits paramètres caractéristiques ;
  . à partir desdites valeurs mesurées, on détermine dans ledit système métrique, parmi lesdites configurations de vol définies, les $n$ configurations de vol les plus proches de ladite phase de vol, $n$ étant un nombre entier prédéfini ;
  . on détermine une fonction d'appartenance de ladite phase de vol respectivement par rapport à chacune desdites $n$ configurations de vol les plus proches ; et
  . on déduit, à partir des fonctions d'appartenance ainsi déterminées et des indices de flou de ces $n$ configurations de vol les plus proches, la configuration de vol de laquelle fait partie le cas échéant ladite phase de vol.

Ainsi, grâce à l'invention, les configurations de vol d'un aéronef peuvent être déterminées de façon quasi-continue et précise, en effectuant l'essentiel des traitements sur un nombre $n$ limité de configurations de vol prédéfinies.

De plus, comme on le verra ci-après, le procédé conforme à l'invention peut être perfectionné lors de sa mise en oeuvre, en permettant en particulier l'intégration de nouvelles configurations de vol non définies dans ladite étape préliminaire.

De façon avantageuse, pour calculer l'indice de flou d'une configuration de vol :

- on détermine dans ledit système métrique, à partir des valeurs mesurées desdits paramètres, les positions des phases de vol représentatives de ladite configuration de vol ;
- à partir des positions ainsi déterminées, on calcule dans ledit système métrique le centre de gravité de ces positions, correspondant au centre de gravité de ladite configuration de vol ;
- on détermine, pour chacune desdites phases de vol représentatives, dans ledit système métrique, la distance entre ledit centre de gravité et la position de ladite phase de vol ;
- on détermine, pour chacune desdites phases de vol, à partir de la distance correspondante ainsi déterminée, la fonction d'appartenance à ladite configuration de vol ; et
- à partir des fonctions d'appartenance ainsi déterminées, on calcule ledit indice de flou.

En outre, pour une phase de vol déterminée de distance $D(X_j,C_i)$ au centre de gravité de la configuration de vol correspondante, la fonction d'appartenance $\mu(X_j)$ est définie de façon avantageuse par la relation :

$$\mu(X_j) = \exp(-D(X_j,C_i)),$$

tandis que la valeur de flou $\nu(C_i)$ d'une configuration de vol est définie avantageusement par la relation :

$$\nu(C_i) = M.\sum_{j=1}^{j=L} S(\mu(X_j))$$

dans laquelle :

- M est un coefficient prédéfini,
- L est le nombre de phases de vol considérées représentatives de ladite configuration de vol,
- $\mu(X_j)$ représente la fonction d'appartenance d'une phase de vol à ladite configuration de vol, et
- $S(x)$ est la fonction entropique de Shannon, définie par : $S(x) = -x.\text{Log}(x) - (1-x).\text{Log}(1-x)$.

Par ailleurs, pour déterminer les n configurations de vol les plus proches d'une phase de vol, avantageusement :

- pour toutes les configurations de vol définies, on calcule dans ledit système métrique la distance entre ladite phase de vol et le centre de gravité de la configuration de vol considérée ;
- on compare entre elles les distances ainsi calculées ; et
- on retient les n configurations de vol présentant les distances les plus faibles.

Dans un premier mode de réalisation avantageux, la distance définie précédemment entre une phase de vol et une configuration de vol correspond à la distance statistique de Mahalanobis dans le système métrique correspondant, tandis que, dans un second mode de réalisation avantageux, ladite distance est calculée à partir de la relation :

$$D(X_j,C_i) = \sqrt{(X_j{-}R)^t.\sigma^{-1}.(X_j{-}R)}$$

dans laquelle :

- $X_j$ est la position de ladite phase de vol dans ledit système métrique,
- R est la position du centre de gravité de ladite configuration de vol dans ledit système métrique,
- t est un coefficient prédéfini, et
- $\sigma$ représente la matrice diagonale des variances de ladite configuration de vol.

Par ailleurs, dans un mode de réalisation particulièrement avantageux de l'invention, pour déduire la configuration de vol à partir des fonctions d'appartenance et des indices de flou :

- on recherche parmi les n configurations de vol les plus proches, celles pour lesquelles la fonction d'appartenance de la phase de vol est supérieure ou égale au produit $K.\nu(C_i)$, dans lequel K représente un coefficient inférieur ou égal à 1, de préférence égal à 0,85, et $\nu(C_i)$ est l'indice de flou calculé ; et
- on déduit :

  . si une seule configuration de vol satisfait à la condition précédente, que la phase de vol fait partie de cette configuration de vol ;
  . si plusieurs configurations de vol satisfont à la condition précédente, que la phase de vol fait partie de la configuration de vol pour laquelle la fonction d'appartenance est la plus élevée ; et
  . si aucune configuration de vol ne satisfait à la condition précédente, que ladite phase de vol ne fait partie d'aucune desdites configurations de vol définies.

Ceci concerne en particulier les configurations de transition (évolutions progressives des conditions de vol) et celle choisie correspond à l'endommagement de la configuration dont la fonction d'appartenance est la plus élevée.

En outre, de façon avantageuse, une phase de vol qui ne fait partie d'aucune configuration de vol définie est considérée comme une nouvelle configuration de vol utilisée lors de mises en oeuvre ultérieures dudit procédé, ce qui permet de perfectionner ledit procédé en intégrant dans celui-ci des configurations de vol non prises en compte initialement.

De préférence, on utilise comme configurations de vol différentes au moins certaines des phases de vol suivantes de l'aéronef : le décollage, la montée, le maintien en palier, la prise de virages, la descente, l'approche et l'atterrissage.

De plus, on utilise de préférence comme paramètres caractéristiques à mesurer au moins certains des paramètres suivants de l'aéronef : le facteur de charge, la vitesse, la température, l'altitude, le dérapage en lacet, l'assiette longitudinale, l'assiette latérale, la vitesse angulaire de lacet, les commandes de vol, la masse et la commande de lacet.

A cette liste de paramètres caractéristiques, on peut ajouter avantageusement, dans le cas d'un hélicoptère, au moins certains des paramètres suivants : le régime du rotor principal, la correction du palonnier, la puissance du rotor principal et la puissance du rotor arrière de l'hélicoptère.

La présente invention concerne également un dispositif pour la mise en oeuvre dudit procédé précité.

Selon l'invention, ledit dispositif est remarquable en ce qu'il comporte :

- un premier calculateur susceptible de calculer l'indice de flou de chacune des configurations de vol définies ;
- un second calculateur susceptible de calculer les fonctions d'appartenance d'une phase de vol à définir aux $n$ configurations de vol les plus proches ; et
- un calculateur central relié auxdits premier et second calculateurs et susceptible de déterminer la configuration de vol de laquelle fait partie ladite phase de vol à définir.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre, à partir d'un graphique, les relations entre différentes valeurs calculées lors de la mise en oeuvre de l'invention.

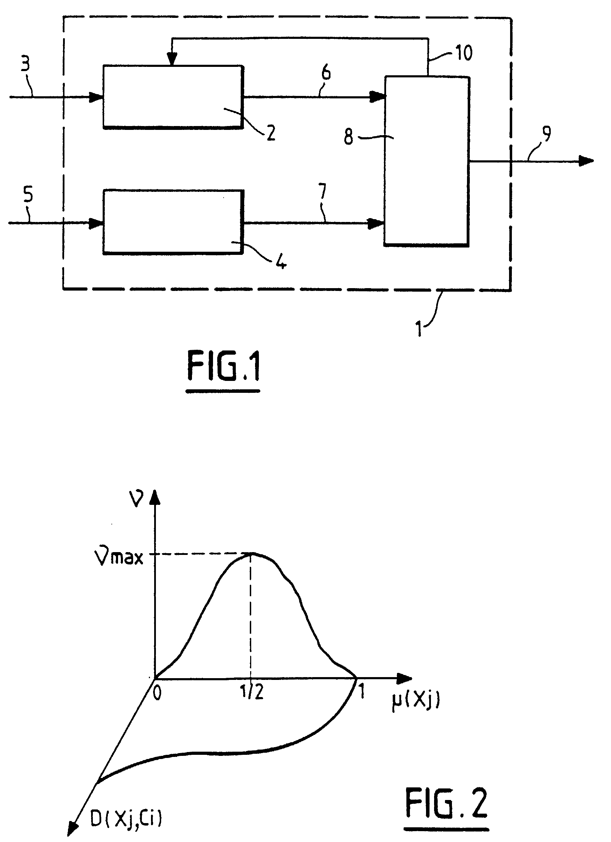

Le dispositif 1 conforme à l'invention et représenté schématiquement sur la figure 1 est destiné à déterminer les configurations de vol d'un aéronef, en particulier un hélicoptère.

Une configuration de vol d'un aéronef correspond à une phase de vol présentant des caractéristiques de vol uniformes et pendant laquelle l'aéronef est généralement soumis à des types de contraintes relativement constants. Il peut s'agir par exemple du décollage ou de la montée dudit aéronef. On précisera ci-après un choix préférentiel de configurations de vol, dans un mode de réalisation avantageux de l'invention.

La connaissance des configurations de vol de l'aéronef, par exemple la configuration de vol actuelle, est généralement nécessaire :

- en temps réel, pour le pilote ou pour des dispositifs embarqués, en particulier pour des raisons de surveillance de l'aéronef ; et/ou
- au retour au sol, pour des dispositifs ou des opérateurs au sol, en particulier pour des raisons de vérification et de maintenance dudit aéronef.

La présente invention concerne un procédé permettant de déterminer de façon rapide et précise les configurations de vol d'un aéronef. Ledit procédé présente à cet effet deux étapes, à savoir une première étape (ou étape préliminaire) permettant de définir différentes configurations de vol distinctes et spécifiques et de leur associer des éléments de reconnaissance caractéristiques, et une seconde étape permettant d'associer une phase de vol à caractériser à l'une des configurations de vol ainsi définies.

Selon l'invention, ladite première étape du procédé présente les opérations suivantes :

- on définit les différentes configurations de vol supposées possibles pour ledit aéronef ;
- on détermine une pluralité de phases de vol représentatives desdites configurations de vol ;
- on détermine une pluralité de paramètres caractéristiques susceptibles d'être mesurés sur l'aéronef ;
- on mesure sur ledit aéronef, pour chacune desdites phases de vol, les valeurs desdits paramètres ; et
- pour chacune desdites configurations de vol, on calcule dans un système métrique déterminé, à partir desdites valeurs mesurées des paramètres pour les phases de vol représentatives, un indice de flou qui est représentatif de la situation de ladite configuration de vol dans ledit système métrique déterminé, tel que précisé ci-dessous.

De préférence, on utilise selon l'invention, comme configurations de vol différentes, au moins certaines des phases de vol suivantes de l'aéronef : le décollage, la montée, le maintien en palier, la prise de virages, la descente, l'approche et l'atterrissage. Les configurations retenues sont celles utilisées pour le dimensionnement des pièces et désignées par spectre standard de vol ou spectre de référence.

Pour chacune de ces configurations de vol, on détermine donc des phases de vol représentatives. Ainsi, à titre d'exemple, pour le décollage, on peut choisir au moins certaines des phases de vol différentes suivantes :

- des décollages en mode normal : de façon standard, à droite, à gauche, avec du vent latéral et/ou du vent axial ;
- des décollages selon une pente maximale : de nouveau sous différentes conditions possibles de vent et de direction d'envol ; et
- des décollages selon une pente minimale.

On fait ensuite effectuer à l'aéronef les phases de vol choisies et on mesure sur ledit aéronef, au cours de l'exécution de ces phases de vol, les valeurs d'une pluralité de paramètres prédéterminés, dont de préférence au moins certains des paramètres suivants : le facteur de charge, la vitesse, la température, l'altitude, le dérapage en lacet, l'assiette longitudinale, l'assiette latérale, la vitesse angulaire de lacet, les commandes de vol, la masse et la commande de lacet.

Dans le cas d'un hélicoptère, on peut utiliser en plus des paramètres précédents, au moins certains des paramètres suivants : le régime du rotor principal, la correction du palonnier, la puissance du rotor principal et la puissance du rotor arrière.

Selon l'invention, pour déterminer l'indice de flou $\nu$ (Ci) d'une configuration de vol Ci, i = 1 à p, p étant le nombre de configurations de vol différentes définies, on effectue dans ledit système métrique qui est défini par m axes discriminants les opérations suivantes :

- on calcule dans ledit système métrique le centre de gravité R de ladite configuration de vol à partir de la relation :

$$R = \left( \sum_{j=1}^{j=L} Xj \right) / L$$

L étant le nombre de phases de vol représentatives associées à ladite configuration de vol, au cours desquelles on a effectué les mesures desdits paramètres, et Xj étant la position dans ledit système métrique d'une desdites L phases de vol, position qui est déterminée à partir des mesures desdits paramètres ;

- on calcule, pour chacune desdites phases de vol considérées, la distance D(Xj,Ci) entre sa position Xj et ledit centre de gravité R à partir de la relation :

$$D(Xj,Ci) = \sqrt{(Xj{-}R)^t.\sigma^{-1}.(Xj{-}R)}$$

dans laquelle :

- . $t$ est un coefficient prédéfini, et
- . $\sigma$ représente la matrice diagonale des variances de la configuration de vol Ci ;

- on calcule, pour chacune desdites L phases de vol considérées, une fonction d'appartenance $\mu$(Xj) de ladite phase de vol à ladite configuration de vol Ci à partir de la relation :

$$\mu(Xj) = \exp (-D(Xj,Ci))$$

- à partir des fonctions d'appartenance desdites L phases de vol considérées, on calcule l'indice de flou $\nu$(Ci) qui est défini par la relation :

$$\nu(Ci) = M. \sum_{j=1}^{j=L} S(\mu(Xj))$$

dans laquelle :

- . M est un coefficient prédéfini, et
- . S(x) est une fonction qui est connue sous le nom de fonction de Shannon et qui est définie par :

$$S(x) = -x.Log(x) - (1-x).Log(1-x).$$

Comme on peut le voir sur la figure 2, qui illustre les relations entre certains des termes précédents :

- la fonction d'appartenance $\mu$(Xj) d'une phase de vol à une configuration de vol est comprise entre 0 et 1. Pour $\mu$(Xj) = 0, on est sûr que ladite phase de vol ne fait pas partie de cette configuration de vol, tandis que pour $\mu$(Xj) = 1, on est sûr qu'elle en fait partie ;
- l'indice de flou $\nu$ est nul lorsque $\mu$(Xj) est égal à 0 ou 1, car il n'existe alors aucune incertitude quant à l'appartenance, et il est maximal ($\nu$max) lorsque $\mu$(Xj) = ½ et que l'incertitude est la plus élevée ;
- la distance D(Xj,Ci) entre une phase de vol et une configuration de vol :

- . est nulle, lorsque ladite phase de vol fait partie de cette configuration de vol ($\mu$(Xj) = 1) ; et
- . est maximale, lorsque ladite phase de vol ne fait pas partie de cette configuration de vol ($\mu$(Xj) = 0).

Cette première étape du procédé conforme à l'invention, telle que décrite précédemment, est mise en oeuvre par un calculateur 2 du dispositif 1 qui reçoit par l'intermédiaire d'une liaison 3 les mesures des paramètres caractéristiques, effectuées au cours desdites phases de vol. Ladite liaison 3 est reliée à cet effet :

- soit simultanément à différents dispositifs de mesure non représentés effectuant lesdites mesures,
- soit à un système centralisé non représenté regroupant lesdites mesures.

On décrit à présent la seconde étape du procédé conforme à l'invention permettant de déterminer à laquelle desdites configurations de vol définies précédemment appartient une phase de vol à définir.

A cet effet, selon l'invention :

- au cours de ladite phase de vol à définir, on mesure les valeurs desdits paramètres caractéristiques ;
- à partir desdites valeurs mesurées, on détermine dans ledit système métrique, parmi les configurations de vol définies précédemment, les n configurations de vol les plus proches de ladite phase de vol, n étant un nombre entier prédéfini qui est de préférence égal au nombre de degrés de libertés dudit système métrique, c'est-à-dire au nombre d'axes discriminants dudit système métrique, à savoir m dans le présent exemple ;

- pour ces n configurations de vol, on détermine la fonction d'appartenance correspondante de ladite phase de vol, telle que définie précédemment ; et

- à partir desdites fonctions d'appartenance déterminées et à partir des indices de flou desdites n configurations de vol, on détermine le cas échéant la configuration de vol de laquelle fait partie ladite phase de vol.

Pour déterminer les n configurations de vol les plus proches :

- on calcule dans ledit système métrique, pour chacune des configurations de vol définies, la distance entre le centre de gravité de ladite configuration de vol et la position de ladite phase de vol, déterminée à partir des mesures desdits paramètres caractéristiques. Ce calcul de distance est effectué en utilisant, soit la distance statistique de Mahalanobis, soit la distance $D(Xj,Ci)$ définie précédemment ;

- on compare entre elles les distances ainsi calculées ; et

- on sélectionne les n configurations de vol présentant les distances les plus faibles.

Les opérations précédentes sont effectuées par un calculateur 4 du dispositif 1 conforme à l'invention, qui reçoit les mesures des paramètres caractéristiques par l'intermédiaire d'une liaison 5 et qui transmet les résultats par l'intermédiaire d'une liaison 7 à un calculateur central 8, ledit calculateur central 8 recevant en outre, par l'intermédiaire d'une liaison 6, les résultats des traitements décrits précédemment du calculateur 2.

Ledit calculateur central 8 recherche alors, parmi lesdites n configurations de vol les plus proches, celles pour lesquelles la fonction d'appartenance reçue du calculateur 4 est supérieure ou égale au produit K.ν (Ci), dans lequel K représente un coefficient inférieur ou égal à 1 et ν(Ci) est l'indice de flou calculé et transmis par le calculateur 2, et il en déduit :

- si une seule configuration de vol satisfait à la condition précédente, que la phase de vol fait partie de cette configuration de vol ;

- si plusieurs configurations de vol satisfont à la condition précédente, que la phase de vol fait partie de la configuration de vol pour laquelle la fonction d'appartenance est la plus élevée ; et

- si aucune configuration ne satisfait à la condition précédente, que ladite phase de vol ne fait partie d'aucune des configurations de vol définies dans la première étape du procédé conforme à l'invention.

Dans ce dernier cas, on conclut que :

- soit une erreur est apparue dans la mise en oeuvre de l'invention, par exemple une erreur de mesure,

- soit ladite phase de vol fait partie d'une configuration de vol nouvelle, différente des configurations de vol prédéfinies.

On notera que dans le cadre de l'invention, le coefficient K est de préférence choisi égal à 0,85.

Le dispositif 1 peut transmettre les résultats obtenus par l'intermédiaire d'une liaison 9 à des dispositifs utilisateurs non représentés, par exemple un dispositif d'affichage ou une mémoire de stockage.

La présente invention décrite précédemment comporte de nombreux avantages. Elle est en particulier précise et sa mise en oeuvre est très rapide.

De plus, le dispositif 1 permet d'affiner et d'enrichir le procédé conforme à l'invention d'une double manière, tel que précisé ci-dessous, par l'intermédiaire d'une liaison 10 permettant de transmettre des données du calculateur central 8 au calculateur 2.

Ainsi, d'une part, lorsqu'une phase de vol est classée de la manière décrite précédemment dans une configuration de vol déterminée, ledit calculateur central 8 peut transmettre les caractéristiques de ladite phase de vol audit calculateur 2 qui associe alors cette phase de vol à ladite configuration de vol. Cette association suppose que le calculateur 2 détermine le nouveau centre de gravité et le nouvel indice de flou de cette configuration de vol, ce qui permet d'affiner ces valeurs qui sont ensuite utilisées lors de mises en oeuvre ultérieures du procédé conforme à l'invention.

Cette opération de prise en compte d'une phase de vol peut être réalisée, soit indéfiniment, soit jusqu'à ce que le nombre de phases de vol associées à une configuration de vol soit égal à une valeur déterminée.

D'autre part, dans le cas où le calculateur central 8 conclut qu'une phase de vol déterminée ne fait partie d'aucune configuration de vol définie, il transmet, dans un mode de réalisation particulièrement avantageux de l'invention, les caractéristiques de cette phase de vol au calculateur 2 qui la considère comme une nouvelle configuration de vol. Ceci permet d'enrichir le procédé conforme à l'invention par des configurations de vol qui n'ont pas été définies dans la première étape dudit procédé. Ainsi, l'invention peut être perfectionnée au fur et à mesure de sa mise en oeuvre.

Selon l'invention, le dispositif 1 peut être utilisé de différentes manières.

Ainsi, dans un premier mode de réalisation, ledit dispositif 1 est entièrement embarqué à bord de l'aéronef, ce qui permet d'obtenir en temps réel les résultats décrits précédemment, qui sont ensuite transmis au pilote ou à des dispositifs, par exemple des dispositifs de surveillance, dudit aéronef.

Dans un deuxième mode de réalisation, permettant également d'obtenir les résultats en temps réel, on embarque uniquement le calculateur 4 et le calculateur central 8 dudit dispositif 1, tandis que le calculateur 2 effectue ses opérations au sol, dont les résultats sont enregistrés dans une mémoire non représentée qui est également embarquée et qui est reliée au calculateur central 8 susceptible de la consulter.

Finalement, dans un troisième mode de réalisation, ledit dispositif 1 reste au sol, tandis que l'aéronef embarque une mémoire non représentée qui est reliée aux différents dispositifs de mesure desdits paramètres caractéristiques et qui enregistre les mesures effectuées. Les résultats enregistrés sont transmis à la fin de la mission de l'aéronef au dispositif 1 qui effectue alors les traitements au sol. L'enregistrement peut par exemple être effectué sur un support rigide, en particulier une disquette, susceptible d'être utilisé par ledit dispositif 1.

Ces différents modes de réalisation permettent de bien mettre en évidence les nombreux avantages de la présente invention.

**Revendications**

1. Procédé pour déterminer les configurations de vol d'un aéronef,
caractérisé :

   - en ce que, dans une étape préliminaire :

     . on définit les différentes configurations de vol supposées possibles pour ledit aéronef ;
     . on détermine une pluralité de phases de vol représentatives desdites configurations de vol ;
     . on détermine une pluralité de paramètres caractéristiques susceptibles d'être mesurés sur l'aéronef ;
     . on mesure sur ledit aéronef, pour chacune desdites phases de vol, les valeurs desdits paramètres ; et
     . pour chacune desdites configurations de vol, on calcule dans un système métrique déterminé, à partir desdites valeurs mesurées des paramètres pour les phases de vol représentatives, un indice de flou qui est représentatif de la situation de ladite configuration de vol dans ledit système métrique ; et

   - en ce que, pour une phase de vol dudit aéronef à définir :

     . au cours de ladite phase de vol, on mesure les valeurs desdits paramètres caractéristiques ;
     . à partir desdites valeurs mesurées, on détermine dans ledit système métrique, parmi lesdites configurations de vol définies, les $n$ configurations de vol les plus proches de ladite phase de vol, $n$ étant un nombre entier prédéfini ;
     . on détermine une fonction d'appartenance de ladite phase de vol respectivement par rapport à chacune desdites $n$ configurations de vol les plus proches ; et
     . on déduit, à partir des fonctions d'appartenance ainsi déterminées et des indices de flou de ces $n$ configurations de vol les plus proches, la configuration de vol de laquelle fait partie le cas échéant ladite phase de vol.

2. Procédé selon la revendication 1,
caractérisé en ce que, pour calculer l'indice de flou d'une configuration de vol :

   - on détermine dans ledit système métrique, à partir des valeurs mesurées desdits paramètres, les positions des phases de vol représentatives de ladite configuration de vol ;
   - à partir des positions ainsi déterminées, on calcule dans ledit système métrique le centre de gravité de ces positions, correspondant au centre de gravité de ladite configuration de vol ;
   - on détermine, pour chacune desdites phases de vol représentatives, dans ledit système métrique, la distance entre ledit centre de gravité et la position de ladite phase de vol ;
   - on détermine, pour chacune desdites phases de vol, à partir de la distance correspondante ainsi déterminée, la fonction d'appartenance à ladite configuration de vol ; et
   - à partir des fonctions d'appartenance ainsi déterminées, on calcule ledit indice de flou.

3. Procédé selon l'une des revendications 1 ou 2,
caractérisé en ce que, pour une phase de vol déterminée de distance D(Xj,Ci) au centre de gravité de la configuration de vol correspondante, la fonction d'appartenance $\mu(Xj)$ est définie par la relation :

$$\mu(Xj) = \exp(-D(Xj,Ci)).$$

4. Procédé selon la revendication 3,
caractérisé en ce que l'indice de flou $\nu(Ci)$ d'une configuration de vol est défini par la relation :

$$\nu(Ci) = M. \sum_{j=1}^{j=L} S(\mu(Xj))$$

dans laquelle :

- M est un coefficient prédéfini,
- L est le nombre de phases de vol considérées représentatives de ladite configuration de vol,
- μ(Xj) représente la fonction d'appartenance d'une phase de vol à ladite configuration de vol, et
- S(x) est la fonction entropique de Shannon, définie par :

$$S(x) = -x.Log(x) - (1-x).Log(1-x).$$

5. Procédé selon l'une quelconque des revendications précédentes,
caractérisé en ce que, pour déterminer les <u>n</u> configurations de vol les plus proches d'une phase de vol :

- pour toutes les configurations de vol définies, on calcule dans ledit système métrique la distance entre ladite phase de vol et le centre de gravité de la configuration de vol considérée ;
- on compare entre elles les distances ainsi calculées ; et
- on retient les <u>n</u> configurations de vol présentant les distances les plus faibles.

6. Procédé selon l'une quelconque des revendications 2 à 5, caractérisé en ce que la distance entre une phase de vol et une configuration de vol est calculée à partir de la distance statistique de Mahalanobis dans le système métrique correspondant.

7. Procédé selon l'une quelconque des revendications 2 à 5, caractérisé en ce que la distance entre une phase de vol et une configuration de vol est calculée à partir de la relation :

$$D(Xj,Ci) = \sqrt{(Xj-R)^t.\sigma^{-1}.(Xj-R)}$$

dans laquelle :

- Xj est la position de ladite phase de vol dans ledit système métrique,
- R est la position du centre de gravité de ladite configuration de vol dans ledit système métrique,
- t est un coefficient prédéfini, et
- σ représente la matrice diagonale des variances de ladite configuration de vol.

8. Procédé selon l'une quelconque des revendications précédentes,
caractérisé en ce que, pour déduire la configuration de vol à partir des fonctions d'appartenance et des indices de flou :

- on recherche parmi les <u>n</u> configurations de vol les plus proches, celles pour lesquelles la fonction d'appartenance de la phase de vol est supérieure ou égale au produit K.ν(Ci), dans lequel K représente un coefficient inférieur ou égal à 1 et ν(Ci) est l'indice de flou calculé ; et
- on déduit :

  . si une seule configuration de vol satisfait à la condition précédente, que la phase de vol fait partie de cette configuration de vol ;
  . si plusieurs configurations de vol satisfont à la condition précédente, que la phase de vol fait partie de la configuration de vol pour laquelle la fonction d'appartenance est la plus élevée ; et
  . si aucune configuration de vol ne satisfait à la condition précédente, que ladite phase de vol ne fait partie d'aucune desdites configurations de vol définies.

9. Procédé selon la revendication 8,
caractérisé en ce que le coefficient K est égal à 0,85.

10. Procédé selon l'une des revendications 8 ou 9,
caractérisé en ce qu'une phase de vol qui ne fait partie d'aucune configuration de vol définie est considérée comme une nouvelle configuration de vol utilisée lors des mises en oeuvre ultérieures dudit procédé.

11. Procédé selon l'une quelconque des revendications précédentes,
caractérisé en ce que l'on utilise comme configurations de vol différentes au moins certaines des phases de vol suivantes de l'aéronef : le décollage, la montée, le maintien en palier, la prise de virages, la descente, l'approche et l'atterrissage.

12. Procédé selon l'une quelconque des revendications précédentes,
caractérisé en ce que l'on utilise comme paramètres caractéristiques à mesurer au moins certains des paramètres suivants de l'aéronef : le facteur de charge, la vitesse, la température, l'altitude, le dérapage en lacet, l'assiette longitudinale, l'assiette latérale, la vitesse angulaire de lacet, les commandes de vol, la masse et la commande de lacet.

13. Procédé selon l'une quelconque des revendications précédentes, ledit aéronef étant un hélicoptère,

caractérisé en ce que l'on utilise comme paramètres caractéristiques à mesurer au moins certains des paramètres suivants de l'hélicoptère : le régime du rotor principal, la correction du palonnier, la puissance du rotor principal et la puissance du rotor arrière.

14. Dispositif pour la mise en oeuvre du procédé spécifié sous l'une quelconque des revendications précédentes, caractérisé en ce qu'il comporte :

- un premier calculateur (2) susceptible de calculer l'indice de flou de chacune des configurations de vol définies ;
- un second calculateur (4) susceptible de calculer les fonctions d'appartenance d'une phase de vol à définir aux n configurations de vol les plus proches ; et
- un calculateur central (8) relié auxdits premier et second calculateurs (2, 4) et susceptible de déterminer la configuration de vol de laquelle fait partie ladite phase de vol à définir.

**Patentansprüche**

1. Verfahren zum Ermitteln der Flugkonfigurationen eines Flugzeugs, dadurch gekennzeichnet:

- daß in einem vorbereitenden Schritt:

    . die verschiedenen für möglich gehaltenen Flugkonfigurationen für das Flugzeug definiert werden;

    . eine Vielzahl von Flugphasen ermittelt werden, die charakteristisch für diese Flugkonfigurationen sind;

    . eine Vielzahl von charakteristischen Parametern ermittelt werden, die am Flugzeug gemessen werden können;

    . die Werte der Parameter am Flugzeug für jede der Flugphasen gemessen werden; und

    . für jede der Flugkonfigurationen in einem bestimmten metrischen System ausgehend von den gemessenen Werten der Parameter für die charakteristischen Flugphasen ein Unschärfeindex berechnet wird, der charakteristisch für die Lage der Flugkonfiguration in dem metrischen System ist; und

- daß für eine zu definierende Flugphase des Flugzeugs:

    . während dieser Flugphase die Werte der charakteristischen Parameter gemessen werden;

    . ausgehend von diesen gemessenen Werten unter den definierten Flugkonfigurationen in dem metrischen System die n Flugkonfigurationen ermittelt werden, die der Flugphase am nächsten liegen, wobei n eine vorher definierte ganze Zahl ist;

    . eine Zugehörigkeitsfunktion der Flugphase jeweils in Bezug auf jede der n am nächsten liegenden Flugkonfigurationen bestimmt wird; und

    . ausgehend von den so ermittelten Zugehörigkeitsfunktionen und den Unschärfeindices dieser n am nächsten liegenden Flugkonfigurationen die Flugkonfiguration hergeleitet wird, von welcher die Flugphase gegebenenfalls einen Teil bildet.

2. Verfahren nach Anspruch 1, dadurch gekennzeichnet, daß zur Berechnung des Unschärfeindex einer Flugkonfiguration:

- in dem metrischen System ausgehend von den gemessenen Werten der Parameter die Positionen der Flugphasen ermittelt werden, die charakteristisch für die Flugkonfiguratiön sind;
- ausgehend von den so ermittelten Positionen der Schwerpunkt dieser Positionen in dem metrischen System berechnet wird, der dem Schwerpunkt der Flugkonfiguration entspricht;
- für jede der charakteristischen Flugphasen in dem metrischen System der Abstand zwischen dem Schwerpunkt und der Position der Flugphase ermittelt wird;
- für jede der Flugphasen ausgehend von dem so bestimmten entsprechenden Abstand die Zugehörigkeitsfunktion zur Flugkonfiguration ermittelt wird; und
- ausgehend von den so ermittelten Zugehörigkeitsfunktionen der Unschärfeindex berechnet wird.

3. Verfahren nach einem der Ansprüche 1 oder 2, dadurch gekennzeichnet, daß für eine bestimmte Flugphase mit dem Abstand $D(Xj,Ci)$ vom Schwerpunkt der entsprechenden Flugkonfiguration die Zugehörigkeitsfunktion $\mu(Xj)$ durch die Beziehung definiert ist:

$$\mu(Xj) = \exp(-D(Xj,Ci))$$

4. Verfahren nach Anspruch 3, dadurch gekennzeichnet, daß der Unschärfewert $\nu(Ci)$ einer Flugkonfiguration durch die Beziehung:

$$\nu(Ci) = M.\sum_{j=1}^{j=L} S(\mu(Xj))$$

definiert wird, in welcher:

- M ein vorher definierter Koeffizient ist,
- L die Anzahl der Flugphasen ist, die für die Flugkonfiguration als charakteristisch betrachtet werden,
- $\mu(Xj)$ die Zugehörigkeitsfunktion einer Flugphase zur Flugkonfiguration darstellt, und
- S(x) die entropische Shannon-Funktion ist, die durch:

$$S(x) = -x.Log(x) - (1-x).Log(1-x)$$

definiert ist.

5. Verfahren nach einem der vorhergehenden Ansprüche, dadurch gekennzeichnet, daß zum Ermitteln der n Flugkonfigurationen, die einer Flugphase am nächsten liegen:

- für alle definierten Flugkonfigurationen in dem metrischen System der Abstand zwischen der Flugphase und dem Schwerpunkt der betrachteten Flugkonfiguration berechnet wird;
- die so berechneten Abstände untereinander verglichen werden; und
- die n Flugkonfigurationen ausgewählt werden, die die geringsten Abstände aufweisen.

6. Verfahren nach einem der Ansprüche 2 bis 5, dadurch gekennzeichnet, daß der Abstand zwischen einer Flugphase und einer Flugkonfiguration ausgehend vom statistischen Mahalanobis-Abstand im entsprechenden metrischen System berechnet wird.

7. Verfahren nach einem der Ansprüche 2 bis 5, dadurch gekennzeichnet, daß der Abstand zwischen einer Flugphase und einer Flugkonfiguration ausgehend von der Beziehung:

$$D(Xj,Ci) = \sqrt{(Xj\text{-}R)^t.\sigma^{-1}.(Xj\text{-}R)}$$

berechnet wird, in welcher:

- Xj die Position der Flugphase in dem metrischen System ist,
- R die Position des Schwerpunktes der Flugkonfiguration in dem metrischen System ist;
- t ein vorher definierter Koeffizient ist, und
- $\sigma$ die Diagonalmatrix der Varianzen der Flugkonfiguration darstellt.

8. Verfahren nach einem der vorhergehenden Ansprüche, dadurch gekennzeichnet, daß zur Herleitung der Flugkonfiguration ausgehend von den Zugehörigkeitsfunktionen und den Unschärfeindices:

- unter den n am nächsten liegenden Flugkonfigurationen nach denjenigen gesucht wird, für welche die Zugehörigkeitsfunktion der Flugphase größer oder gleich dem Produkt $K.\nu(Ci)$ ist, worin K einen Koeffizienten kleiner oder gleich 1 darstellt und $\nu(Ci)$ der berechnete Unschärfeindex ist; und
- hergeleitet wird, daß:

  . wenn eine einzige Flugkonfiguration die vorhergehende Bedingung erfüllt, die Flugphase einen Teil dieser Flugkonfiguration bildet;
  . wenn mehrere Flugkonfigurationen die vorhergehende Bedingung erfüllen, die Flugphase einen Teil der Flugkonfiguration bildet, für welche die Zugehörigkeitsfunktion die höchste ist; und
  . wenn keine Flugkonfiguration die vorhergehende Bedingung erfüllt, die Flugphase keinen Teil irgendeiner der definierten Flugphasen bildet.

9. Verfahren nach Anspruch 8, dadurch gekennzeichnet, daß der Koeffizient K = 0,85 ist.

10. Verfahren nach einem der Ansprüche 8 oder 9, dadurch gekennzeichnet, daß eine Flugphase, die keinen Teil irgendeiner definierten Flugkonfiguration bildet, als neue Flugkonfiguration betrachtet wird, die bei späteren Durchführungen des Verfahrens verwendet wird.

11. Verfahren nach einem der vorhergehenden Ansprüche, dadurch gekennzeichnet, daß als verschiedene Flugkonfigurationen wenigstens einige der folgenden Flugphasen des Flugzeugs verwendet werden: das Abheben, der Steigflug, der Horizontalflug, der Kurvenflug, der Sinkflug, der Anflug und die Landung.

12. Verfahren nach einem der vorhergehenden Ansprüche, dadurch gekennzeichnet, daß als zu messende charakteristische Parameter wenigstens einige der folgenden Parameter des Flugzeugs verwendet werden: der Lastfaktor, die Geschwindigkeit, die Temperatur, die Höhe, das Slippen beim Gieren, die Längstrimmung, die Quertrimmung, die Gierwinkelgeschwindigkeit, die Flugsteuerungen, die Masse und die Giersteuerung.

**13.** Verfahren nach einem der vorhergehenden Ansprüche, wobei das Flugzeug ein Hubschrauber ist, dadurch gekennzeichnet, daß als zu messende charakteristische Parameter wenigstens einige der folgenden Parameter des Hubschraubers verwendet werden: die Drehzahl des Hauptrotors, die Korrektur des Steuerhebels, die Leistung des Hauptrotors und die Leistung des Heckrotors.

**14.** Vorrichtung zur Durchführung des in einem der vorhergehenden Ansprüche angegebenen Verfahrens, dadurch gekennzeichnet, daß sie aufweist:

- einen ersten Rechner (2), der den Unschärfeindex jeder der definierten Flugkonfigurationen berechnen kann;
- einen zweiten Rechner (4), der die Zugehörigkeitsfunktionen einer zu definierenden Flugphase zu n am nächsten liegenden Flugkonfigurationen berechnen kann; und
- einen Zentralrechner (8), der mit dem ersten und zweiten Rechner (2, 4) verbunden ist und die Flugkonfiguration ermitteln kann, von welcher die zu definierende Flugphase einen Teil bildet.

**Claims**

**1.** Process for determining the flight configurations of an aircraft, characterized:

- in that, in a preliminary step:

  . the various supposed possible flight configurations of the said aircraft are defined;
  . a plurality of flight phases representative of the said flight configurations are determined;
  . a plurality of characteristic parameters capable of being measured on the aircraft are determined;
  . the values of the said parameters are measured on the said aircraft, for each of the said flight phases; and
  . for each of the said flight configurations, a fuzziness index which is representative of the situation of the said flight configuration in a specified metric system is calculated in the said metric system, from the said measured values of the parameters for the representative flight phases; and

- for a flight phase of the said aircraft to be defined:

  . in the course of the said flight phase, the values of the said characteristic parameters are measured;
. the n flight configurations which are closest, from among the said defined flight configurations, to the said flight phase, n being a predefined integer, are determined in the said metric system from the said measured values;
. a membership function is determined for the said flight phase in relation respectively to each of the said n closest flight configurations; and
. the flight configuration of which the said flight phase forms part, as appropriate, is deduced from the membership functions thus determined and from the fuzziness indices of these n closest flight configurations.

**2.** Process according to Claim 1, characterized in that, to calculate the fuzziness index of a flight configuration:

- the positions of the flight phases representative of the said flight configuration are determined in the said metric system from the measured values of the said parameters;
- the centre of gravity of the positions thus determined, corresponding to the centre of gravity of the said flight configuration, is calculated in the said metric system from these positions;
- the distance between the said centre of gravity and the position of the said flight phase is determined for each of the said representative flight phases, in the said metric system;
- the membership function in the said flight configuration is determined, for each of the said flight phases, from the corresponding distance thus determined; and
- the said fuzziness index is calculated from the membership functions thus determined.

**3.** Process according to one of Claims 1 and 2, characterized in that, for a determined flight phase of distance $D(X_j,C_i)$ to the centre of gravity of the corresponding flight configuration, the membership function $\mu(X_j)$ is defined by the relation:

$$\mu(X_j) = \exp(-D(X_j,C_i))$$

**4.** Process according to Claim 3, characterized in that the fuzziness index $\nu(C_i)$ of a flight configuration is defined by the relation:

$$\nu(Ci) = M. \sum_{j=1}^{j=L} S(\mu(Xj))$$

in which:

- M is a predefined coefficient,
- L is the number of relevant flight phases representative of the said flight configuration,
- $\mu(Xj)$ represents the membership function of a flight phase in the said flight configuration, and
- S(x) is Shannon's entropy function, defined by:

$$S(x) = -x.Log(x) - (1-x).Log(1-x).$$

5. Process according to any one of the preceding claims,
characterized in that, to determine the n flight configurations closest to a flight phase:

- the distance between the said flight phase and the centre of gravity of the relevant flight configuration is calculated in the said metric system, for all the defined flight configurations;
- the distances thus calculated are compared; and
- the n flight configurations with the smallest distances are picked.

6. Process according to any one of Claims 2 to 5, characterized in that the distance between a flight phase and a flight configuration is calculated from the statistical distance of Mahalanobis in the corresponding metric system.

7. Process according to any one of Claims 2 to 5, characterized in that the distance between a flight phase and a flight configuration is calculated from the relation:

$$D(Xj,Ci) = \sqrt{(Xj-R)^t \cdot \sigma^{-1} \cdot (Xj-R)}$$

in which:

- Xj is the position of the said flight phase in the said metric system,
- R is the position of the centre of gravity of the said flight configuration in the said metric system,
- t is a predefined coefficient, and
- $\sigma$ represents the diagonal matrix of variances of the said flight configuration.

8. Process according to any one of the preceding claims, characterized in that, in order to deduce the flight configuration from the membership functions and from the fuzziness indices:

- those among the n closest flight configurations are sought for which the membership function of the flight phase is greater than or equal to the product $K.\nu(Ci)$, in which K represents a coefficient less than or equal to 1 and $\nu(Ci)$ is the calculated fuzziness index; and
- we deduce:

  . if a single flight configuration satisfies the above condition, that the flight phase forms part of this flight configuration;
  . if several flight configurations satisfy the above condition, that the flight phase forms part of the flight configuration for which the membership function is highest; and
  . if no flight configuration satisfies the above condition, that the said flight phase does not form part of any of the said defined flight configurations.

9. Process according to Claim 8,
characterized in that the coefficient K is equal to 0.85.

10. Process according to one of claims 8 and 9, characterized in that a flight phase which does not form part of any defined flight configuration is regarded as a new flight configuration used during subsequent applications of the said process.

11. Process according to any one of the preceding claims,
characterized in that at least some of the following flight phases of the aircraft are used as different flight configurations: takeoff, climb, holding level, banking, descent, approach and landing.

12. Process according to any one of the preceding claims,
characterized in that at least some of the following parameters of the aircraft are used as characteristic parameters to be measured: load factor, speed, temperature, altitude, yaw sideslip, longitudinal attitude, lateral attitude, angular rate of yaw, flight controls, mass and yaw control.

13. Process according to any one of the preceding claims, the said aircraft being a helicopter, characterized in that at least some of the following parameters of the helicopter are used as characteristic parameters to be measured: main rotor speed, rudder bar correction, main rotor power and tail rotor power.

**14.** Device for applying the process set forth in any one of the preceding claims, characterized in that it includes:

- a first computer (2) capable of calculating the fuzziness index of each of the defined flight configurations;
- a second computer (4) capable of calculating the membership functions of a flight phase to be defined in the n closest flight configurations; and
- a central computer (8) linked to the said first and second computers (2, 4) and capable of determining the flight configuration of which the said flight phase to be defined forms part.

FIG.1

FIG.2